# EUROPEAN PATENT SPECIFICATION

(11) **EP 4 091 084 B1**
(45) Date of publication and mention of the grant of the patent: **09.07.2025**
(21) Application number: 21795686.1
(22) Date of filing: 25.03.2021
(51) Int. Cl.: G06F 21/55, G06N 20/00, H04L 9/40

(54) **ENDPOINT SECURITY USING AN ACTION PREDICTION MODEL**
ENDPUNKTSICHERHEIT UNTER VERWENDUNG EINES AKTIONSVORHERSAGEMODELLS
SÉCURITÉ DE POINT D'EXTRÉMITÉ À L'AIDE D'UN MODÈLE DE PRÉDICTION D'ACTION

(30) Priority: 28.04.2020 US 202063016454 P
(43) Date of publication of application: 23.11.2022
(73) Proprietor: Absolute Software Corporation, Vancouver, BC V7X 1K8 (CA)
(72) Inventor: DU, Li, Surrey, British Columbia V3S 8M7 (CA); SONG, Yunhui, Surrey, British Columbia V3R 0S2 (CA); HUANG, Zhenyu, Richmond, British Columbia V6Y 3L7 (CA); LEI, Bo, Port Moody, British Columbia V3H 5M2 (CA)
(74) Representative: Kalkoff & Partner Patentanwälte mbB
(86) International application number: PCT/CA2021/050393
(87) International publication number: WO 2021/217239

(56) References cited:
- US-A1- 2016 057 166
- US-A1- 2019 297 096
- US-A1- 2020 045 075
- US-B1- 10 341 377
- US-B1- 10 542 017
- HAN YUFEI YUFEI_HAN@SYMANTEC.COM; SUN GUOLEI GUOLEI.SUN@KAUST.EDU.SA; SHEN YUN YUN_SHEN@SYMANTEC.COM; ZHANG XIANGLIANG XIANGLIANG.: "Multi-label Learning with Highly Incomplete Data via Collaborative Embedding", HIGH PERFORMANCE COMPILATION, COMPUTING AND COMMUNICATIONS, ACM, 2 PENN PLAZA, SUITE 701NEW YORKNY10121-0701USA, 19 July 2018 (2018-07-19) - 10 March 2019 (2019-03-10), 2 Penn Plaza, Suite 701New YorkNY10121-0701USA , pages 1494 - 1503, XP058653951, ISBN: 978-1-4503-6638-0, DOI: 10.1145/3219819.3220038
- SHEN, YUN ET AL.: "Tiresias: Predicting Security Events Through Deep Learning", CCS 2018, 19 October 2018 (2018-10-19), pages 592 - 605, XP058636334, [retrieved on 20210602], DOI: https://dl.acm.org/doi/10.1145/3243734.3243811

## Description

### TECHNICAL FIELD

The present disclosure relates to the protection of electronic devices. In particular, it relates to real-time endpoint security protection using a data model that predicts security actions in response to security events.

### BACKGROUND

Today, there are many endpoint security issues such as viruses, ransomware, phishing ware, stolen identity, stolen device, etc. It is both important and challenging to protect sensitive information stored on and transmitted by endpoints such as smartphones, tablets, laptops and other mobile devices.

There are many endpoint security providers on the market, many of which provide similar solutions to solve security issues. One of them is Microsoft Defender Advanced Threat Protection^{™} (Microsoft Defender ATP). The main strategy of this solution is the implementation of rules based on knowledge. The typical workflow for rule-based implementations is as follows: after the information related to a security issue is collected from the endpoint, the security provider analyzes the information and determines a solution. After this, an application is deployed to the endpoint to fix the security issue. In this sense, the solution is a rule-based application.

There are some disadvantages with a rules-based strategy. The solution from a given provider to fix a security issue is not necessarily standard, and may not always be relied upon to be the best, because it depends on the specific provider's ability to analyze the issue and build the corresponding rules for its remediation. In addition, the process needs a number of manual steps. Furthermore, there can be some delay in fixing a newly emerged security issue, as the provider needs to collect information and analyze the issue before a fix can be applied to the endpoints.

Other solutions include the use of artificial intelligence (Al) to identify threats, by classifying detected events as either a threat or not a threat. The output of the Al models may be a risk score or whether a pattern of events is an anomaly. However, once the threat or anomaly is identified, other techniques, such as rules-based techniques, are used to determine what response to take. The remedial action is then based on the risk score, the prediction of a threat, or the identification of an anomaly. Remedial actions may be automated or referred to an administrator. Administrators can review the prediction of the Al model as to its correctness, which can be fed back into the model.

Patent application US20190068627 to Thampy analyzes the risk of user behavior when using cloud services. Patent US9609011 to Muddu et al. discloses the detection of anomalies within a network using machine learning. Patent application US20190260804 to Beck et al. uses machine learning to detect a threat in a network entity. A score is assigned to the threat, and an automatic response may be made based on the score. Patent US10200389 to Rostamabadi et al. discloses looking at log files to identify malware. Patent application US20190230100 to Dwyer et al. is a rules-based solution for analyzing events on endpoints. The remedial action may be decided at the endpoint or at a connected server.
US2020045075A1 discloses a computing system performs real-time mitigations for unfamiliar threat scenarios by identifying a particular threat scenario for a client system that has not previously experienced the threat scenario and for which a remediation process is unknown. The computing system responds to the unknown threat scenario by generating and providing the client system a mitigation file that includes a predictive set of mitigation processes for responding to the threat scenario. The mitigation file is generated by first generating a threat vector that identifies a plurality of different threat scenario characteristics for the particular threat scenario. Then, a classification model is applied to the threat vector to identify a predictive set of mitigation processes that are determined to be a best fit for the threat vector and that are included in the mitigation file.
US10542017B1 discloses a computer-implemented method for personalizing security incident reports may include (i) generating, within a training dataset, a feature vector for each of a group of security incidents, the feature vector including features that describe the security incidents and the features including response codes that a set of clients previously assigned to the security incidents as labels, (ii) training a supervised machine learning function on the training dataset using the response codes that the set of clients previously assigned to the security incidents, (iii) applying the supervised machine learning function to a feature vector that describes a new security incident on the set of clients to predict that the set of clients will ignore the new security incident, and (iv) personalizing a list of security incidents that is electronically reported to the set of clients by deprioritizing the new security incident. US10341377B1 discloses a computer-implemented method for categorizing security incidents may include (i) generating, within a training dataset, a feature vector for each of a group of security incidents, the feature vector including features that describe the security incidents and the features including categories that were previously assigned to the security incidents as labels to describe the security incidents, (ii) training a supervised machine learning function on the training dataset such that the supervised machine learning function learns how to predict an assignment of future categories to future security incidents, (iii) assigning a category to a new security incident by applying the supervised machine learning function to a new feature vector that describes the new security incident, and (iv) notifying a client of the new security incident and the category assigned to the new security incident.

### SUMMARY

An Al data model directly predicts remedial actions to take in response to detected security events, bypassing the intermediate step of determining the risk or threat level of the events. The data model is trained with security events and corresponding security actions. The data model is trained with the data from multiple users' actions, which may result in the action the data model predicts being considered to be best practice.

Once the data model is mature, i.e. after a machine learning technique has been used with enough data to train the data model, the data model has the ability to predict what to do if similar security event patterns later occur on an endpoint. The result of the prediction is the security action or actions that need to be applied to the endpoint. In cases where the data model is present in the endpoint, the endpoint can be protected in real time.

The endpoint can also be protected when a brand new security issue occurs. If the new security issue triggers a set of security events known to the data model, or close to those in the data model, then the data model has the ability to predict an appropriate security action or actions, even though the specific security issue may at this point be still unknown.

The specific Al model disclosed is a multi-label classification of sets of events directly into sets of actions, omitting the step of determining the threat level. By omitting the step of determining the threat level, greater efficiency may be obtained.

Disclosed herein is a method of protecting an electronic device comprising the steps of: generating a multi-label classification data model comprising security event groups labeled with security actions; detecting one or more security events; predicting, using the multi-label classification data model, one or more security actions based on the detected one or more security events; and implementing the predicted one or more security actions on the electronic device.

Also disclosed herein is a system for protecting an electronic device comprising a processor and computer readable memory storing computer readable instructions that, when executed by the processor, cause the processor to: generate a multi-label classification data model comprising security event groups labeled with security actions; receive one or more security events that are detected in relation to the electronic device; predict, using the multi-label classification data model, one or more security actions based on the detected one or more security events; and instruct the electronic device to implement the predicted one or more security actions.

### BRIEF DESCRIPTION OF THE DRAWINGS

FIG. 1 is a schematic diagram of how users' input is used by machine learning to create a data model, according to an embodiment of the present invention.
FIG. 2 is a schematic diagram of a use case that describes the steps and features needed in the solution, according to an embodiment of the present invention.
FIG. 3 is a block diagram of the components of the system, according to an embodiment of the present invention.
FIG. 4 is a flowchart of a process for predicting a security action, according to an embodiment of the present invention.
FIG. 5 is a schematic diagram of the data model, according to an embodiment of the present invention.

### DETAILED DESCRIPTION

### A. Glossary

Data model, or Al model, Al data model or machine learning model: an algorithm that takes complex inputs that it may or may not have seen before, and predicts the output that most correctly corresponds to the input. The prediction is based on input and output data sets used for training the data model, in which the outputs for specific inputs are identified as correct or incorrect.

Endpoint, or device: This is any electronic device or any computing device to be protected. Non-limiting examples of a device include a laptop, cell phone, personal digital assistant, smart phone, memory stick, personal media device, gaming device, personal computer, tablet computer, electronic book, camera with a network interface, and netbook. Most devices protected by the invention will be mobile devices, but static devices, such as desktop computers, projectors, televisions, photocopiers and household appliances may also be protected. Many other kinds of electronic devices may be included, such as hi-fi equipment, cameras, bicycles, cars, barbecues and toys, if they include memory and a processor. Devices are configured to communicate with a remote server, and they may initiate the communications and/or the communications may be initiated by the server. Communications may be via Wi-Fi^{™}, SMS, cellular data or satellite, for example, or may use another communications protocol. While the invention is often explained in relation to laptops, it is to be understood that it applies equally to other electronic and computing devices.

Security event: A security event is a change or abnormal behavior on the endpoint that is a security concern, e.g. a software change, a hardware change, a configuration change, abnormal web/network usage, abnormal software usage, abnormal hardware usage, abnormal device usage, or abnormal data file usage. Security events may be specific or general, and may include multiple constituent security events. A security event formed of two constituent events in one order may be different to a security event formed of the same two constituent events in a different order. A security event may depend on the state of the endpoint, such as whether a user is logged in, whether it is connected to a network, or its location.

Security issue: This is a high-level description of a problem related to an endpoint, e.g. viruses, ransomware, phishing ware, identity stolen, device stolen. A security issue may be the cause of one or multiple security events.

Security action: A measure applied to an endpoint to protect it against a security issue or one or more security events. For example, a security action may be to stop an application, stop a service, display a warning message, log out a user, lock a screen, uninstall an application, wipe data, wipe the operating system (OS), or freeze the endpoint. One or multiple security actions may be implemented in response to a security event or security issue.

System: Unless otherwise qualified, this refers to the subject of the invention. It refers to a combination of one or more physical devices, including hardware, firmware and software, configured to protect one or more endpoints. The system uses a multi-label classification data model to predict one or more security actions based one or more detected security events, and implement the predicted actions on the endpoints.

### B. Exemplary Embodiments

The embodiments described below allow for the prediction of security actions directly from detected security events using an Al data model.

A security issue may be the result of a poor measure applied to an endpoint, and can trigger a series of security events on the endpoint. For example, when ransomware impacts an endpoint, one or more of the following security events may occur: an unauthorized application is downloaded to the endpoint; an unauthorized application runs in the background; an unauthorized application runs at an irregular time compared to a normal endpoint working time; an unauthorized application uses a high processor, memory or input/output resource; or an unauthorized application accesses sensitive data files.

The strategy used in the disclosed solution is facts based. Given that a particular security issue results in a common or near common set of security events, and that a majority of administrative users will apply the same, specific security response when a particular group of security events occur, then this specific security response will be deemed best practice for fixing the particular security issue. The specific security response involves applying one or more security actions to the endpoint.

Examples of security events are shown in the second column of TABLE 1. Each specific security event is shown as belonging to a particular type of security event, which may be referred to as a general security event. However, the generalization is not necessary for building the data model. By analyzing specific events rather than the type of event or general event, the data model may be more discerning and more accurate.

**TABLE 1**

| **Security Event Type** | **Specific Security Event** |
|---|---|
| Software change | uninstall AV (anti-virus) application, install banned application, install/uninstall software |
| Other events | OS (operating system) change, stop security software service |
| Hardware change | install/uninstall hardware or removable hardware |
| Configuration change | IP (internet protocol) address change, device name change, domain name change, Wi-Fi^{™} name change, geolocation change, user log on |
| Abnormal web/network usage | abnormal internet usage, abnormal network usage, abnormal Wi-Fi^{™} usage, preferred browser change, abnormal browser usage, download application |
| Abnormal software usage | commonly used software change, abnormal storage application usage (e.g. Onedrive^{™}, Dropbox^{™}) |
| Abnormal hardware usage | plug in device usage (e.g. to copy data) |
| Abnormal device usage | abnormal device usage on/off period, abnormal log on failure, abnormal resource usage (processor/memory/inputs-outputs) |
| Abnormal data file usage | access sensitive data files, remove data files, copy data files |

Security actions may have different levels of impact on the endpoint, with the higher impact security actions in general being the response required for correspondingly greater threats. Some examples of security actions are shown in TABLE 2, together with their impact level. However, it is not necessary to determine the level of the threat, not determine the level of action required in response to the threat. This is because the security events are labelled directly with the actions in the data model, which is therefore able to predict security actions directly from security events.

**TABLE 2**

| **Security Action Level** | **Security Action** |
|---|---|
| Low | stop application, stop service, warning message |
| Medium | log out user, lock screen, uninstall application, wipe data |
| High | wipe OS, freeze endpoint |

Whether something represents abnormal behavior is based on a comparison of the endpoint's current behavior with normal behavior. Normal behavior is defined based on normal usage of the device on an ongoing basis, or on usage over a period of time when the device is known to be secure, or based on usage of similar devices by similar users, etc. Abnormal behavior is determined from an analysis of current behavior using the normal behavior as a baseline.

Machine learning is the chosen technique to build a data model to construct the relations between security events and security actions. Specifically, the method described in this solution can be treated as a multi-label classification case. Inputs to the data model are security events that occur on the endpoints. The outputs of the data model are security actions, rather than a determination of the security issue. As such, a response to a threat on an endpoint may be determined in fewer steps than if the security issue were first to be determined and then rated with a threat risk level.

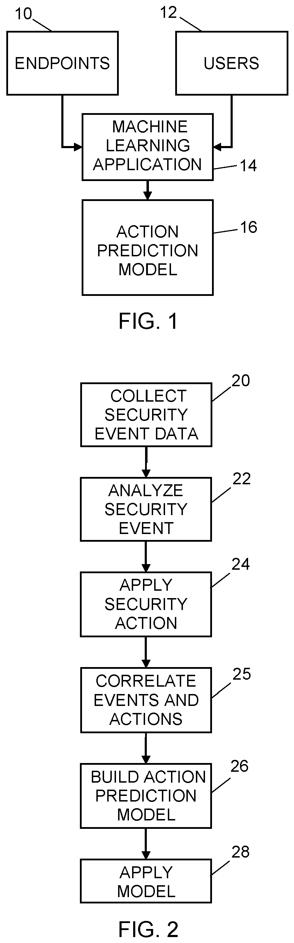

FIG. 1 is an overview of the interaction between the various entities that allow for security actions to be predicted directly from detected security events. The presently disclosed solution takes input from or occurring on endpoints 10, such as security events. The solution also takes inputs from users 12, such as administrative users or computer security personnel, who decide which security actions to apply to endpoints in response to detected security events occurring on the endpoints.

The security events occurring on the endpoints 10 and the security actions applied by the users 12 to the endpoints are fed into a machine learning (ML) application 14 on a server, for example a server in the cloud, to build the action prediction model 16. The action prediction model 16 is the data model that predicts the security actions in response to the security events.

The use case diagram in FIG. 2 describes the steps and features that need to be developed to apply the solution. Firstly, in step 20, data representing security events is collected from multiple endpoints. Next, in step 22, administrative users responsible for the endpoints analyze the security events. In step 24, the administrative users apply security actions to the endpoints as a result of their analysis and in response to the security events. The security actions are collected and correlated with the corresponding security events in step 25. After this, machine learning is used to build the action prediction model in step 26 using the collected security events and security actions. The action prediction model may be created and trained under the guidance of a data scientist, for example. After the action prediction model has been trained, it may then be applied for the protection of endpoints, in step 28.

The action prediction model 16, which is a multi-label classification data model, may use the definitions of security events listed in TABLE 3, for example. An event scenario, which may include one or more security events that are detected in a predetermined period of time, may be described by these attributes. The attributes, or their IDs, may be used in both the machine learning process as well as during operation of the action prediction model 16 after it has been trained. The examples of attributes that are given are non-limiting, and other attributes may also be included in the list. The attributes listed may also be modified. For example, the time period may be set to less than 1 day or more than one day depending on the particular embodiment. Different attributes may have different time periods. Some of the attributes may be combined into a single attribute, for example using the OR disjunction. Other attributes may be divided into multiple individual attributes, such as the abnormal resource usage case.

**TABLE 3**

| **Attribute Name** | **Attribute ID** |
|---|---|
| Hardware change in last 1 day | 1 |
| IP change in last 1 day | 2 |
| Device name change in last 1 day | 3 |
| Domain name change in last 1 day | 4 |
| WiFi^{™} name change in last 1 day | 5 |
| Geolocation change in last 1 day | 6 |
| Logged on user change in last 1 day | 7 |
| Uninstall anti-virus application case in last 1 day | 8 |
| Install banned application case in last 1 day | 9 |
| Uninstall software case in last 1 day | 10 |
| Abnormal device usage case in last 1 day | 11 |
| Log on failure case in last 1 day | 12 |
| Abnormal resource (CPU/memory/IO) usage case in last 1 day | 13 |
| Abnormal plug in device usage case in last 1 day | 14 |
| Abnormal internet usage case in last 1 day | 15 |
| Abnormal network usage case in last 1 day | 16 |
| Abnormal WiFi^{™} usage case in last 1 day | 17 |
| Preferred browser change in last 1 day | 18 |
| Abnormal browser usage case in last 1 day | 19 |
| Common used software change in last 1 day | 20 |
| Abnormal storage application usage case in last 1 day | 21 |
| Abnormal sensitive data file access case in last 1 day | 22 |

Examples of the labels that the machine learning application can use to label the security events scenarios or sets of security events may include those that are defined in TABLE 4. These labels represent the security actions to be taken if predicted by the action prediction model. Again, these are non-limiting examples, which may be added to. These labels will also be used in the action prediction model when in use to protect the endpoints. Labels relating to a common subset of security events may be different depending on other of the security events or attributes. For example, events that are detected while there is no user logged on may be considered to be more serious than the same security events if they occur while the user is logged on.

**TABLE 4**

| Label Name | Label Id |
|---|---|
| Stop application | 1 |
| Stop service | 2 |
| Warning message | 3 |
| Log out user | 4 |
| Lock screen | 5 |
| Uninstall application | 6 |
| Wipe data | 7 |
| Wipe OS | 8 |
| Freeze endpoint | 9 |

Sample data used by the machine learning application to train the data model is shown in TABLE 5. Each line represents the detection of one or more security events. As such, each line may be said to represent a security event scenario. Each scenario may represent a particular time period over which one or more security events are detected. In some lines, the individual security events, i.e. the attributes, are shown to have been detected 0, 1 or 3 times.

**TABLE 5**

| **Attribute** | | | | | | | **Label** | | | | | | | | |
|---|---|---|---|---|---|---|---|---|---|---|---|---|---|---|---|
| ID1 | ID2 | ID3 | ID4 | ID5 | ... | ID22 | ID1 | ID2 | ID3 | ID4 | ID5 | ID6 | ID7 | ID8 | ID9 |
| 1 | 1 | 0 | 0 | 0 | ... | 0 | 0 | 0 | 0 | 1 | 1 | 0 | 0 | 0 | 0 |
| 1 | 0 | 1 | 0 | 0 | ... | 0 | 0 | 0 | 0 | 0 | 1 | 0 | 0 | 0 | 0 |
| 0 | 0 | 0 | 1 | 3 | ... | 0 | 0 | 0 | 0 | 0 | 0 | 0 | 0 | 0 | 1 |

While in the fully developed case it should be ensured that an adequate set of security events is captured for every security issue, or every type of security issue, and used for training the action prediction model, this is not necessary. One option may be considered if the action prediction model is not mature enough, which may be to not initially deploy the action prediction model 16 to the endpoint to predict security actions, but instead collect security events from the endpoint and send them to the server side for analysis and selection of the most appropriate security action or actions. After the action prediction model 16 has been trained, it can then be deployed on the endpoint and used to predict security actions. This may be, however, in an initial mode in which the action prediction model suggests to the administrative user which of the security actions should be applied to the endpoint, rather than automatically applying the security actions to the endpoint. This is a semi-automatic solution in which verification of the predicted action(s) is requested of an administrator before they are implemented.

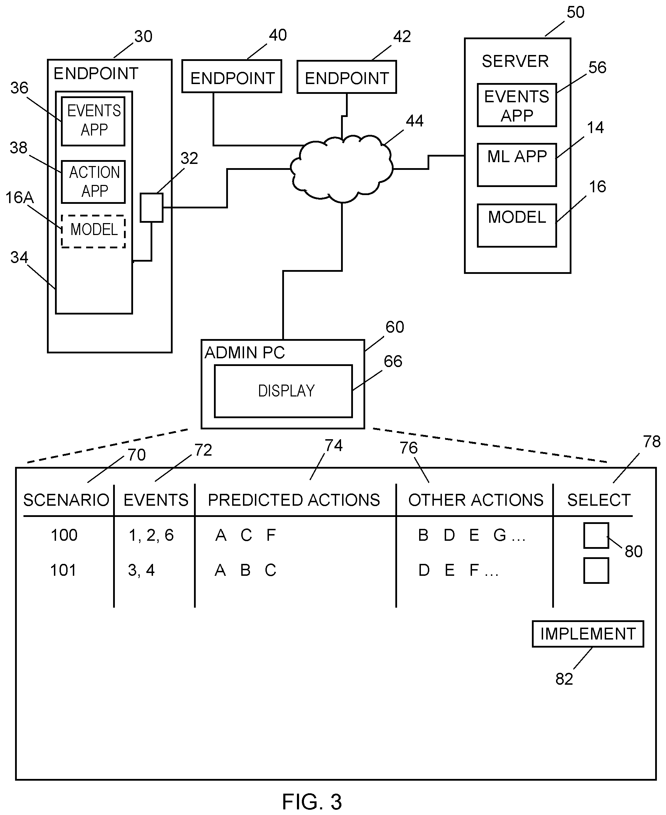

FIG. 3 is an example of the components of the system, including an endpoint 30 and server 50. The action prediction model 16 is present in the server 50, and, optionally, there may be a copy or another version of the action prediction model 16A in the endpoint 30.

The endpoint 30 has an endpoint side application 36 to monitor and collect security events and report the events to the server 50 on the server side of the system. The endpoint 30 also has a set of one or more endpoint side applications 38 to apply the security actions determined by the action prediction model 16 or 16A when security events occur.

The endpoint 30, and other similar endpoints 40, 42 are connected via a network 44 such as the internet to the server 50. The server 50 has a set of server side applications 56 to receive and process events from the endpoints 30, 40, 42. The server 50 also hosts the machine learning application 14 for processing the security event data and the security action data, analyzing the security events and the corresponding security actions taken by both the endpoints autonomously and the administrators, and using machine learning to build the action prediction model 16.

Also present is an administrator's computer 60, connected via the network 44 to the endpoints 30, 40, 42. The administrator's computer 60 has a set of applications to display the security events and security actions and allow the administrators to analyze the security events and choose security actions that are applied or to be applied to the endpoints 30, 40, 42. For example, the display screen 66 of the administrator's computer 60 may display a user interface with a tabulated list of event scenarios (or incidents) 70, where each scenario may be caused by a different security issue, or multiple similar or dissimilar scenarios may be caused by the same security issue. Also displayed in the user interface is a series of one or more security events 72 that make up each scenario, a series of one or more predicted security actions 74 for each scenario, and a list of other optional security actions 76 that may be taken to potentially help resolve the security issue. The predicted security actions 74 and the other security actions 76 may be individually deleted by the administrator, or further security actions may be added to the list of other security actions. Once the administrator is ready to implement the security actions 74, 76 for a given security event scenario, then a selection box 80 in the selection column 78 may then be checked and an "Implement" button 82 clicked. As is expected, there are many other different forms the user interface may take in order to permit the administrator to observe the predicted actions, implement the predicted actions and amend the list of security actions to be applied to the endpoint.

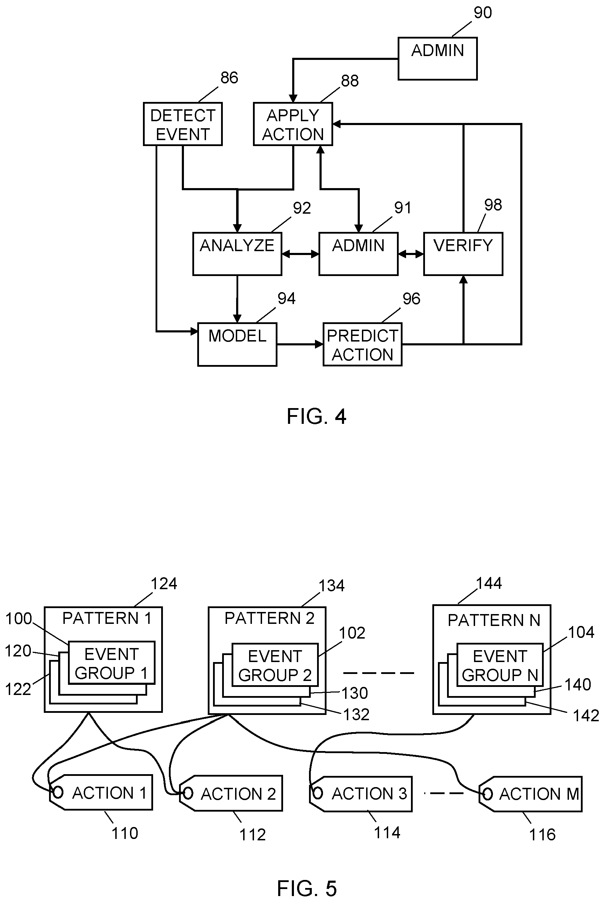

FIG. 4 is a flowchart of an exemplary process for the system when in use. Firstly, a security event is detected in step 86 and a corresponding security action is applied in step 88 by, for example, an administrative user 90. These are then analyzed in step 92 by another administrative user 91 (or the same administrative user 90). In step 94, the result of the analysis 92 is used to build the action prediction model in step 94. The result of the analysis 92 may be, for example, to include the detected event 86 and the applied action 88 in the action prediction model 94. These initial steps are repeated numerous times to train the data model 94.

Once the data model 94 is trained, a security event that is detected in step 86 is passed to the data model 94 directly, bypassing the analysis step 92. The data model 94 then predicts, in step 96, what security action or actions to take. The security action may be applied directly, in step 88, under control of the data model 94, or it may first be verified in step 98 by the administrative user 91 before being applied.

The predicted actions taken on an ongoing basis by the application when running on the individual endpoints may be used to continually train, evolve and reinforce the action prediction model. Likewise, the actions taken by the administrators may also be used to continually train, evolve and reinforce the action prediction model. For example, whenever a new security issue arises, the administrators may be given the opportunity to either approve the security action(s) predicted by the action prediction model, or suggest a more appropriate set of security action(s).

If a brand new security issue occurs, which causes a pattern or scenario of security events that has not been seen before, then the predicted action made by the action prediction model and applied in real time may in some cases not be optimum, but it is expected to be close to optimum. If a security action automatically taken in response to a set of one or more new security events is not optimum, an administrator may be more likely to analyze the problem and choose appropriate action(s), via the verification step 98, before a centralized security provider may decide upon the most appropriate action. This is because it is likely that several different administrators around the globe may exposed to the same, brand new issue, whereas an existing security provider may have limited staff/hours and an existing workload, and may not be able to get to dealing with the new issue as quickly. As the predicted action is reinforced by multiple administrators, or as it is modified and then invoked by multiple administrators, then it may effectively become the optimum action.

If the predicted security action, in step 96, is optimum, then is it likely to be verified, in step 98, by one of the administrators before an centralized security provider may do so, for the same reason as above. One of the reasons for using a machine learning data model rather than a rules engine is that a predicted response is more likely to be closer to a human response than a response determined by a rules engine. As the model is regularly evolved as more and more new security issues occur, in time it may achieve an ability to provide an optimum response for each new security issue.

Referring to FIG. 5, an exemplary action prediction model can be seen. The data model includes groups 100, 102, 104 of security events, each group labeled with one or more security action labels 110, 112, 114, and 116. A group of security events may be considered to be a security event scenario. For example, event group 1 (100) is labeled with security actions 1 and 2 (110, 112). Event group 2 (102) is labeled with security actions 1, 2 and M (110, 112, 116). Event group N (104) is labeled with security action 3 (114).

Event groups 120, 122 that are similar to event group 1 (100) are also labeled with the same actions as event group 1. Event groups 100, 120, 122 can be said to belong to pattern 1 (124) of security events. Event groups 130, 132 that are similar to event group 2 (102) are labeled with the same actions as event group 2. Event groups 102, 130, 132 can be said to belong to pattern 2 (134) of security events. Event groups 140, 142 that are similar to event group N (104) are labeled with the same actions as event group N. Event groups 104, 140, 142 can be said to belong to pattern N (144) of security events. Depending on the data model, the variation between event groups within the same pattern may be wider or narrower than within other patterns, and in some cases there may be no variation. What is notable about the action prediction model is that it does not explicitly output a risk level, nor does it identify a particular security issue. Instead, it jumps directly to predicting the required security actions.

As a consequence of the above, a new set of events that is not identical to any prior event group may be deemed by the model to be within a range of a known pattern, and therefore labeled with the actions corresponding to the pattern. Alternately, the new set of events may be determined to be closer to one pattern than to any other patterns, and therefore labeled with the actions corresponding to the nearest pattern.

### C. Variations

By generalizing the security events as in TABLE 1, the data model becomes simpler, as it does not need to discern between the individual, specific security events that are similar to each other.

Other labels, besides those listed above, may be applied to the events. For example, labels may include track the device, take photos, record videos, capture keystrokes, and quarantine files. These labels correspond to security actions that may be taken by the endpoint to recover it, while protecting data, if the security events suggest that it has been stolen.

Other labels may include amounts in their definitions. For example, abnormal internet usage may be defined as being above a threshold number of gigabytes.

The order in which two or more security events occur may be defined as a separate security event, to which an attribute can be ascribed. The time period during which security events are captured may be changed in other embodiments, and the time period may be variable. The interval of time between two security events may in itself be a security event to which an attribute can be ascribed.

A confidence level may be attached to each set of security events that are detected, the confidence level being indicative of how sure the data model is that the detected set of security events lies within a known pattern of events. If the confidence level is high, then it may be assumed that the detected set of events closely matches a known pattern of events for which the labels (i.e. security actions) are well defined, and have stood the test of time. If the confidence level is high, then the set of actions may be implemented automatically, without necessarily alerting an administrator.

If, however, the confidence level is low, then the data model is less certain as to which of at least two patterns the detected set of security actions belongs to. In this situation, an administrator may be alerted and a decision of the administrator requested. In another embodiment, the data model may default to choose the safest set of security actions to apply. Alternately, the data model may automatically invoke all actions that would be predicted if the set of security events could fall within two or more known patterns. This would mean that the data model is acting on the side of caution. If the administrator is prompted for a response, but does not reply within a set time, then the data model may automatically invoke all the predicted actions.

An administrator may set a rule to instruct the data model how to behave if the confidence level is below a threshold value. The administrator may set the level of the threshold. For example, the threshold may be set relatively high during the initial deployment of the data model, and, after the data model has matured and the administrator has developed confidence in it, then the threshold may be set to a relatively lower level. Administrators may instead set a percentage defining how many of the predicted security actions they are to receive notifications for during a set time period.

When the data model is used for generating a prediction, after the security events are processed, for each action there is a score created for each action. The score represents a probability that relates to the suitability of each action, and its value may range, for example, from 0 to 1. The confidence level may be defined from this score. If there are multiple actions predicted, each action will have its own score and the overall confidence level for the set of actions may be the average of the individual scores. The threshold value may then be based on the overall confidence level.

If the pattern of security events detected is significantly different from any known pattern, then the data model may default to shutting down the endpoint and notifying the administrator.

Different administrators could be notified of predicted and implemented security actions depending on which administrator is on duty.

The data model may be trained or reinforced with simulated events and replicated historical events as well as actual, current or real-time events.

The system may automatically correlate similar patterns of security events that are detected across multiple endpoints, and alert an administrator that multiple endpoints are being affected in a similar way.

The application may include a bot, for example for communication with an administrator, learning what security actions the administrator applies, and learning how the administrator verifies sets of predicted security actions.

Some embodiments may include assigning scores for the one or more actions that are predicted in response to a set of detected events. The scores may be related to the frequency at which the administrators employ the actions. Some embodiments may incorporate rules engines to determine what to do based on the scores.

Events may be processed differently, i.e. some in real time and some not.

Where a processor has been described, it may include two or more constituent processors. Computer readable memories may be divided into multiple constituent memories, of the same or a different type. Steps in the flowcharts and other diagrams may be performed in a different order, steps may be eliminated or additional steps may be included, without departing from the invention.

The description is made for the purpose of illustrating the general principles of the subject matter and not be taken in a limiting sense; the subject matter can find utility in a variety of implementations without departing from the scope of the disclosure made, as will be apparent to those of skill in the art from an understanding of the principles that underlie the subject matter.

## Claims

1. A method of protecting an electronic device comprising the steps of:
generating a multi-label classification data model comprising security event groups labeled with security actions, each group comprising security events and representing a security event scenario;
detecting one or more security events representing a security event scenario;
predicting, using the multi-label classification data model, one or more security actions based on the security event scenario; and
implementing the predicted one or more security actions on the electronic device assigning a confidence level to the detected security events;
when the confidence level is above a threshold, automatically proceeding to the implementing step;
when the confidence level is below the threshold, notifying an administrator and proceeding to the implementing step upon instruction from the administrator.

2. The method of claim 1, wherein the implementing step is performed in real time.

3. The method of claim 1, wherein the one or more security events occur within a fixed time period .

4. The method of claim 1, wherein at least one of the security events comprises multiple constituent security events.

5. The method of claim 1, comprising training the multi-label classification data model with security events and security actions from multiple electronic devices.

6. The method of claim 1, comprising reinforcing the multi-label classification data model with security events and security actions from multiple electronic devices.

7. A system comprising a processor and a computer readable memory storing computer readable instructions that, when executed by the processor, cause the processor to execute the steps of the method defined in any of claims 1-6.

## Patentansprüche

1. Verfahren zum Schutz einer elektronischen Vorrichtung, das die folgenden Schritte umfasst:
Erzeugen eines Multilabel-Klassifizierungsdatenmodells, das Sicherheitsereignisgruppen umfasst, die mit Sicherheitsmaßnahmen beschriftet sind, wobei jede Gruppe Sicherheitsereignisse umfasst und ein Sicherheitsereignisszenario repräsentiert;
Erkennung eines oder mehrerer Sicherheitsereignisse, die ein Sicherheitsereignisszenario repräsentieren;
Vorhersage, unter Verwendung des Multi-Label-Klassifizierungsdatenmodells, einer oder mehrerer Sicherheitsmaßnahmen basierend auf dem Sicherheitsereignisszenario; und
Umsetzung der vorhergesagten einen oder mehreren Sicherheitsmaßnahmen auf dem elektronischen Gerät, wobei den erkannten Sicherheitsereignissen ein Konfidenzniveau zugewiesen wird;
wenn das Konfidenzniveau über einem Schwellenwert liegt, automatisch mit dem Durchführungsschritt fortfahren;
wenn das Vertrauensniveau unter dem Schwellenwert liegt, benachrichtigen eines Administrators und weitergehen zum Implementierungsschritt auf Anweisung des Administrators.

2. Verfahren nach Anspruch 1, wobei der Implementierungsschritt in Echtzeit durchgeführt wird.

3. Verfahren nach Anspruch 1, wobei das eine oder die mehreren Sicherheitsereignisse innerhalb eines festgelegten Zeitraums auftreten.

4. Verfahren nach Anspruch 1, wobei mindestens eines der Sicherheitsereignisse mehrere konstituierende Sicherheitsereignisse umfasst.

5. Verfahren nach Anspruch 1 umfasst das Trainieren des Multilabel-Klassifizierungsdatenmodells mit Sicherheitsereignissen und Sicherheitsmaßnahmen von mehreren elektronischen Geräten.

6. Verfahren nach Anspruch 1 umfasst das Verstärken des Multilabel-Klassifizierungsdatenmodells mit Sicherheitsereignissen und Sicherheitsmaßnahmen von mehreren elektronischen Geräten.

7. System mit einem Prozessor und einem computerlesbaren Speicher, der computerlesbare Befehle speichert, die, wenn sie vom Prozessor ausgeführt werden, den Prozessor veranlassen, Schritte des in einem der Ansprüche 1 bis 6 definierten Verfahrens auszuführen.

## Revendications

1. Méthode de protection d'un appareil électronique comprenant les étapes suivantes :
générer un modèle de données de classification multi-label comprenant des groupes d'événements de sécurité étiquetés avec des actions de sécurité, chaque groupe comprenant des événements de sécurité et représentant un scénario d'événement de sécurité ;
détecter un ou plusieurs événements de sécurité représentant un scénario d'événement de sécurité ;
prédire, à l'aide du modèle de données de classification multi-label, une ou plusieurs actions de sécurité sur la base du scénario d'événement de sécurité ; et
mettre en œuvre la ou les actions de sécurité prévues sur le dispositif électronique en attribuant un niveau de confiance aux événements de sécurité détectés ;
lorsque le niveau de confiance est supérieur à un seuil, passer automatiquement à l'étape de mise en œuvre ;
lorsque le niveau de confiance est inférieur au seuil, avertir un administrateur et passer à l'étape de mise en œuvre sur instruction de l'administrateur.

2. Méthode de la revendication 1, dans laquelle l'étape de mise en œuvre est réalisée en temps réel.

3. Méthode de la revendication 1, dans laquelle un ou plusieurs événements de sécurité se produisent au cours d'une période de temps fixe.

4. Méthode de la revendication 1, dans laquelle au moins un des événements de sécurité comprend plusieurs événements de sécurité constitutifs.

5. Méthode de la revendication 1 consiste à entraîner le modèle de données de classification multi-label avec des événements et des actions de sécurité provenant de plusieurs dispositifs électroniques.

6. Méthode de la revendication 1 consiste à renforcer le modèle de données de classification multi-labels avec des événements et des actions de sécurité provenant de plusieurs dispositifs électroniques.

7. Système comprenant un processeur et une mémoire lisible par ordinateur stockant des instructions lisibles par ordinateur qui, lorsqu'elles sont exécutées par le processeur, amènent ce dernier à exécuter les étapes de la méthode définie dans l'une des revendications 1 à 6.
